(19) Europäisches Patentamt / European Patent Office / Office européen des brevets

(11) **EP 2 858 265 B1**

(12) **EUROPEAN PATENT SPECIFICATION**

(45) Date of publication and mention of the grant of the patent:
**19.08.2020 Bulletin 2020/34**

(21) Application number: **13801092.1**

(22) Date of filing: **05.06.2013**

(51) Int Cl.:
*H04L 5/00* (2006.01)       *H04L 1/00* (2006.01)
*H04L 1/18* (2006.01)       *H04B 7/26* (2006.01)
*H04J 11/00* (2006.01)       *H04L 27/26* (2006.01)

(86) International application number:
**PCT/KR2013/004973**

(87) International publication number:
**WO 2013/183943 (12.12.2013 Gazette 2013/50)**

(54) **METHOD AND APPARATUS FOR RECEIVING CONTROL INFORMATION IN WIRELESS COMMUNICATION SYSTEM**

VERFAHREN UND VORRICHTUNG ZUM EMPFANGEN VON STEUERUNGSINFORMATIONEN IN EINEM DRAHTLOSEN KOMMUNIKATIONSSYSTEM

PROCÉDÉ ET APPAREIL POUR RECEVOIR DES INFORMATIONS DE COMMANDE DANS UN SYSTÈME DE COMMUNICATION SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.06.2012 US 201261655500 P**
**31.08.2012 US 201261695306 P**

(43) Date of publication of application:
**08.04.2015 Bulletin 2015/15**

(73) Proprietor: **LG Electronics Inc.**
**Yeongdeungpo-Gu**
**Seoul 07336 (KR)**

(72) Inventors:
• **SEO, Inkwon**
**Anyang-si**
**Gyeonggi-do 431-080 (KR)**
• **SEO, Hanbyul**
**Anyang-si**
**Gyeonggi-do 431-080 (KR)**

(74) Representative: **Plasseraud IP**
**66, rue de la Chaussée d'Antin**
**75440 Paris Cedex 09 (FR)**

(56) References cited:
**KR-A- 20120 045 038       KR-A- 20120 048 015**
**KR-A- 20120 051 635**

• **LG ELECTRONICS: "Handling of mapping of ePDCCH in presence of other signals", 3GPP DRAFT; R1-122307_HANDLING OF MAPPING OF EPDCCH IN PRESENCE OF OTHER SIGNALS_LG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600570, [retrieved on 2012-05-12]**
• **LG ELECTRONICS: "Discussion on eREG/eCCE definition", 3GPP DRAFT; R1-122308, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050600571, [retrieved on 2012-05-12]**
• **NTT DOCOMO: "Views on Resource Mapping for ePDCCH", 3GPP DRAFT; R1-121977 MAPPING FOR E-PDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Prague, Czech Republic; 20120521 - 20120525, 12 May 2012 (2012-05-12), XP050601030, [retrieved on 2012-05-12]**

**(Cont. next page)**

- MOTOROLA MOBILITY: "EPDCCH Design Aspects", 3GPP DRAFT; R1-121583 EPDCCH DESIGN ASPECTS VFINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599847, [retrieved on 2012-03-20]
- RENESAS MOBILE EUROPE LTD.: 'Resource mapping for ePDCCH' 3GPP TSG RAN WG1 MEETING#69 R1-122359 21 May 2012, PRAGUE, CZECH REPUBLIC, XP050600622 Retrieved from the Internet: <URL:http://www.3gpp.org/ftp/tsg ran/wg1_r11/TSGR1_69/Docs>
- ERICSSON ET AL.: 'Mapping of ePDCCH to RE' 3GPP TSG RAN WG1 MEETING#69 R1-122000 21 May 2012, PRAGUE, CZECH REPUBLIC, XP050600292 Retrieved from the Internet: <URL:http://www.3gpp.org/ftp/tsg ran/wg1_r11/TSGR1_69/Docs>

**Description**

[Technical Field]

This disclosure relates to a wireless communication system, and more particularly, to a method and apparatus for receiving control information through an enhanced physical downlink control channel (EPDCCH).

[Background Art]

Wireless communication systems are widely deployed to provide various kinds of communication services such as voice and data. Generally, these communication systems are multiple access systems capable of supporting communication with multiple users by sharing available system resources (e.g., bandwidth and transmit power). Examples of multiple access systems include a code division multiple access (CDMA) system, a frequency division multiple access (FDMA) system, a time division multiple access (TDMA) system, an orthogonal frequency division multiple access (OFDMA) system, a single carrier frequency-division multiple access (SC-FDMA) system, and a multi-carrier frequency division multiple access (MC-FDMA) system.

The document "Handling of mapping of ePDCCH in presence of other signals", LE ELCTRONICS, 3GPP Draft R1-122307, 12 May 2012, describes that UE-specific RS and CRS are avoided in determining the EPDCCH RE set.

The document "Discussion of eREG/eCCE definition", LG ELECTRONICS, 3GPP Draft R1-122308, 12 May 2012, describes PRB pairs used for EPDCCH that should be configured in a UE-specific manner by high layer signaling. The number of eCCEs per PRB pair should be variable depending on the subframe configuration.

The document "View on Resource Mapping for ePDCCH" NTT DOCOMO, 3GPP Draft R1-121977, 12 May 2012, describes that colliding signals including CRS, legacy control region, PSS/SSS, PBCH, PRS, CSI-RS and DMRS are considered for ePDCCH mapping and the resource mapping scheme for the ePDCCH supports both distributed transmission and localized transmission.

The document D4 "EPDCCH Design Aspects, MOTOROLA MOBILITY, 3GPP Draft R1-121583, 20 March 2012, describes that EPDCCH resources are configured in a UE-specific manner and that distributed transmission and localized transmission are supported for EPDCCH.

[Disclosure]

[Technical Problem]

An object of the present invention devised to solve the problem lies in a method for receiving control information through the EPDCCH when multiple physical resource block pairs are configured for a terminal.

It is to be understood that technical objects to be achieved by the present invention are not limited to the aforementioned technical object and other technical objects which are not mentioned herein will be apparent from the following description to one of ordinary skill in the art to which the present invention pertains.

[Technical Solution]

The invention is defined by the appended claims. In the following, embodiments not falling within the scope of the claims are to be understood as examples useful for understanding the invention.

[Advantageous Effects]

According to embodiments of the present invention, when multiple physical resource block pairs are configured for a terminal, control information may be smoothly received even in the case in which a transmission point to transmit control information through the physical resource block pairs is not confined to a serving cell.

[Description of Drawings]

The accompanying drawings, which are included to provide a further understanding of the invention, illustrate embodiments of the invention and together with the description serve to explain the principle of the invention. In the drawings:

FIG. 1 illustrates a radio frame structure;
FIG. 2 is a diagram illustrating a resource grid for one downlink (DL) slot;

FIG. 3 is a diagram illustrating a DL subframe structure;

FIG. 4 is a diagram illustrating an uplink (UL) subframe structure;

FIG. 5 illustrates a search space;

FIG. 6 illustrates a reference signal;

FIG. 7 is a diagram illustrating heterogeneous deployments;

FIG. 8 is a diagram illustrating a coordinated multi-point (CoMP) cluster;

FIG. 9 illustrates a relationship between a transmission point and an EPDCCH PRB set according to one embodiment of the present invention;

FIG. 10 illustrates handover of control information according to one embodiment of the present invention;

FIG. 11 illustrates detecting an EPDCCH using different quasi co location (QCL) information for each EPDCCH resource set according to one embodiment of the present invention; and

FIG. 12 is a diagram illustrating configuration of transceivers.

[Best Mode]

The embodiments described below are constructed by combining elements and features of the present invention in a predetermined form. The elements or features may be considered optional unless explicitly mentioned otherwise. Each of the elements or features can be implemented without being combined with other elements. In addition, some elements and/or features may be combined to configure an embodiment of the present invention. The sequential order of the operations discussed in the embodiments of the present invention may be changed. Some elements or features of one embodiment may also be included in another embodiment, or may be replaced by corresponding elements or features of another embodiment.

Embodiments of the present invention will be described focusing on a data communication relationship between a base station and a terminal. The base station serves as a terminal node of a network over which the base station directly communicates with the terminal. Specific operations illustrated as being conducted by the base station in this specification may be conducted by an upper node of the base station, as necessary.

That is, it is obvious that various operations performed to implement communication with the terminal over a network composed of multiple network nodes including a base station can be conducted by the base station or network nodes other than the base station. The term "base station (BS)" may be replaced with terms such as "fixed station," "Node-B," "eNode-B (eNB)," and "access point." The term "relay" may be replaced with such terms as "relay node (RN)" and "relay station (RS)". The term "terminal" may also be replaced with such terms as "user equipment (UE)," "mobile station (MS)," "mobile subscriber station (MSS)" and "subscriber station (SS)."

It should be noted that specific terms used in the description below are intended to provide better understanding of the present invention, and these specific terms may be changed to other forms within the present invention.

In some cases, well-known structures and devices may be omitted or block diagrams illustrating only key functions of the structures and devices may be provided, so as not to obscure the concept of the present invention. The same reference numbers will be used throughout this specification to refer to the same or like parts.

Exemplary embodiments of the present invention can be supported by standard documents for at least one of wireless access systems including an institute of electrical and electronics engineers (IEEE) 802 system, a 3rd generation partnership project (3GPP) system, a 3GPP long term evolution (LTE) system, an LTE-advanced (LTE-A) system, and a 3GPP2 system. That is, steps or parts which are not described in the embodiments of the present invention so as not to obscure the present invention may be supported by the above documents. All terms used herein may be supported by the aforementioned standard documents.

The embodiments of the present invention described below can be applied to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA may be embodied through radio technologies such as universal terrestrial radio access (UTRA) or CDMA2000. TDMA may be embodied through radio technologies such as global system for mobile communication (GSM)/general packet radio service (GPRS)/enhanced data rates for GSM evolution (EDGE). OFDMA may be embodied through radio technologies such as IEEE 802.11 (Wi-Fi), IEEE 802.16 (WiMAX), IEEE 802-20, and evolved UTRA (E-UTRA). UTRA is a part of the universal mobile telecommunications system (UMTS). 3rd generation partnership project (3GPP) long term evolution (LTE) is a part of evolved UMTS (E-UMTS), which uses E-UTRA. 3GPP LTE employs OFDMA for downlink and employs SC-FDMA for uplink. LTE-Advanced (LTE-A) is an evolved version of 3GPP LTE. WiMAX can be explained by IEEE 802.16e standard (WirelessMAN-OFDMA reference system) and advanced IEEE 802.16m standard (WirelessMAN-OFDMA Advanced system). For clarity, the following description focuses on 3GPP LTE and 3GPP LTE-A systems. However, the present invention is not limited thereto.

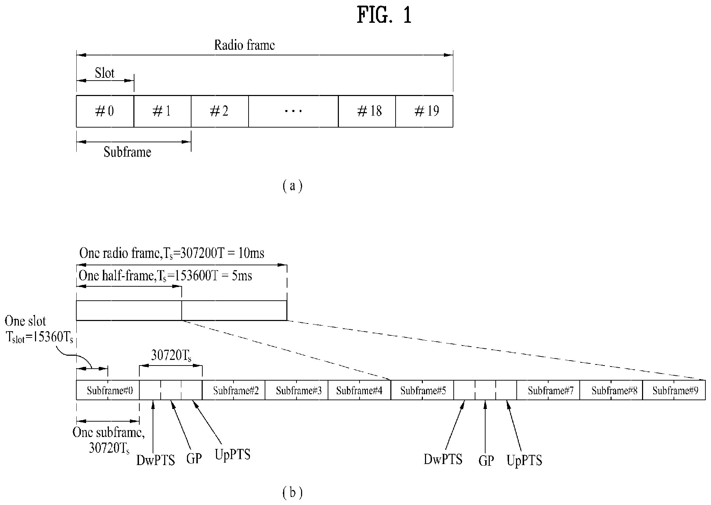

Hereinafter, a radio frame structure will be described with reference to FIG. 1.

In a cellular OFDM wireless packet communication system, an uplink (UL)/downlink (DL) data packet is transmitted on a subframe-by-subframe basis, and one subframe is defined as a predetermined time interval including a plurality of OFDM symbols. 3GPP LTE supports radio frame structure type 1 applicable to frequency division duplex (FDD) and radio frame structure type 2 applicable to time division duplex (TDD).

FIG. 1(a) illustrates radio frame structure type 1. A downlink radio frame is divided into 10 subframes. Each subframe includes two slots in the time domain. The duration of transmission of one subframe is defined as a transmission time interval (TTI). For example, a subframe may have a duration of 1 ms and one slot may have a duration of 0.5 ms. A slot may include a plurality of OFDM symbols in the time domain and a plurality of resource blocks (RBs) in the frequency domain. Since 3GPP LTE employs OFDMA for downlink, an OFDM symbol represents one symbol period. An OFDM symbol may be referred to as an SC-FDMA symbol or symbol period. A resource block (RB), which is a resource allocation unit, may include a plurality of consecutive subcarriers in a slot.

The number of OFDM symbols included in one slot depends on the configuration of a cyclic prefix (CP). CPs are divided into an extended CP and a normal CP. For a normal CP configuring each OFDM symbol, each slot may include 7 OFDM symbols. For an extended CP configuring each OFDM symbol, the duration of each OFDM symbol is extended and thus the number of OFDM symbols included in a slot is smaller than in the case of the normal CP. For the extended CP, each slot may include, for example, 6 OFDM symbols. When a channel state is unstable as in the case of high speed movement of a UE, the extended CP may be used to reduce inter-symbol interference.

When the normal CP is used, each slot includes 7 OFDM symbols, and thus each subframe includes 14 OFDM symbols. In this case, the first two or three OFDM symbols of each subframe may be allocated to a physical downlink control channel (PDCCH) and the other OFDM symbols may be allocated to a physical downlink shared channel (PDSCH).

FIG. 1(b) illustrates radio frame structure type 2. A type-2 radio frame includes two half frames, each of which has 5 subframes, downlink pilot time slots (DwPTSs), guard periods (GPs), and uplink pilot time slots (UpPTSs). Each subframe consists of two slots. The DwPTS is used for initial cell search, synchronization, or channel estimation in a UE, whereas the UpPTS is used for channel estimation in an eNB and UL transmission synchronization of a UE. The GP is provided to eliminate UL interference caused by multipath delay of a DL signal between DL and UL. Regardless of the types of radio frames, a subframe consists of two slots.

The illustrated radio frame structures are merely examples, and various modifications may be made to the number of subframes included in a radio frame, the number of slots included in a subframe, or the number of symbols included in a slot.

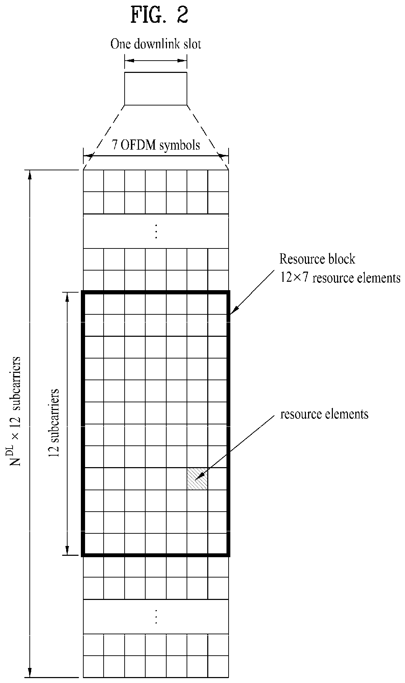

FIG. 2 is a diagram illustrating a resource grid of one DL slot. One DL slot includes 7 OFDM symbols in the time domain and an RB includes 12 subcarriers in the frequency domain. However, embodiments of the present invention are not limited thereto. For the normal CP, a slot may include 7 OFDM symbols. For the extended CP, a slot may include 6 OFDM symbols. Each element in the resource grid is referred to as a resource element (RE). An RB includes $12 \times 7$ REs. The number $N^{DL}$ of RBs included in a DL slot depends on a DL transmission bandwidth. A UL slot may have the same structure as the DL slot.

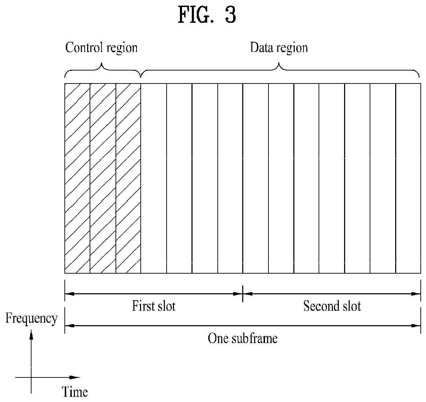

FIG. 3 illustrates a DL subframe structure. Up to three OFDM symbols in the leading part of the first slot in a DL subframe corresponds to a control region to which a control channel is allocated. The other OFDM symbols of the DL subframe correspond to a data region to which a PDSCH is allocated. DL control channels used in 3GPP LTE include, for example, a physical control format indicator channel (PCFICH), a physical downlink control channel (PDCCH), and a physical hybrid automatic repeat request (HARQ) indicator channel (PHICH). The PCFICH is transmitted in the first OFDM symbol of a subframe, carrying information about the number of OFDM symbols used for transmission of control channels in the subframe. The PHICH carries a HARQ ACK/NACK signal in response to uplink transmission. Control information carried on the PDCCH is called downlink control information (DCI). The DCI includes UL or DL scheduling information or a UL transmit power control command for a UE group. The PDCCH may deliver information about the resource allocation and transport format of a DL shared channel (DL-SCH), resource allocation information of a UL shared channel (UL-SCH), paging information of a paging channel (PCH), system information on the DL-SCH, information about resource allocation for a higher-layer control message such as a random access response transmitted on the PDSCH, a set of transmit power control commands for individual UEs in a UE group, transmit power control information, and voice over internet protocol (VoIP) activation information. A plurality of PDCCHs may be transmitted in the control region. A UE may monitor a plurality of PDCCHs. A PDCCH is transmitted in an aggregation of one or more consecutive control channel elements (CCEs). A CCE is a logical allocation unit used to provide a PDCCH at a coding rate based on the state of a radio channel. A CCE corresponds to a plurality of RE groups. The format of a PDCCH and the number of available bits for the PDCCH are determined depending on the correlation between the number of CCEs and the coding rate provided by the CCEs. An eNB determines the PDCCH format according to DCI transmitted to a UE and adds a cyclic redundancy check (CRC) to the control information. The CRC is masked with an identifier (ID) known as a radio network temporary identifier (RNTI) according to the owner or usage of the PDCCH. If the PDCCH is directed to a specific UE, its CRC may be masked with a cell-RNTI (C-RNTI) of the UE. If the PDCCH is for a paging message, the CRC of the PDCCH may be masked with a paging radio network temporary identifier (P-RNTI). If the PDCCH delivers system information (more specifically, a system information block (SIB)), the CRC may be masked with a system information ID and a system information RNTI (SI-RNTI). To indicate a random access response which is a response to a random access preamble transmitted by a UE, the CRC may be masked with a random access-RNTI (RA-RNTI).

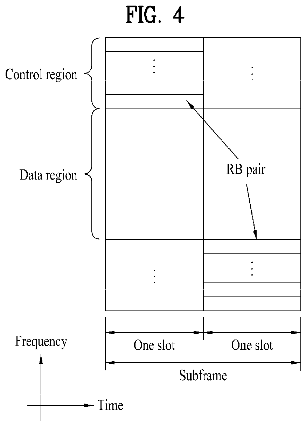

FIG. 4 illustrates a UL subframe structure. A UL subframe may be divided into a control region and a data region in the frequency domain. A physical uplink control channel (PUCCH) carrying uplink control information is allocated to the control region. A physical uplink shared channel (PUSCH) carrying user data is allocated to the data region. To maintain single carrier property, a UE does not simultaneously transmit a PUSCH and a PUCCH. A PUCCH for a UE is allocated to an RB pair in a subframe. The RBs from an RB pair occupy different subcarriers in two slots. This is called frequency hopping of the RB pair allocated to the PUCCH over a slot boundary.

DCI format

Currently, DCI formats 0, 1, 1A, 1B, 1C, 1D, 2, 2A, 2B, 2C, 3, 3A and 4 are defined in LTE-A (Release 10). DCI formats 0, 1A, 3 and 3A are defined to have the same message size to reduce the number of times of blind decoding, which will be described later. According to purposes of control information to be transmitted, the DCI formats may be divided into i) DCI formats 0 and 4, which are used for uplink grant, ii) DCI formats 1, 1A, 1B, 1C, 1D, 2, 2A, 2B and 2C, which are used for downlink scheduling allocation, and iii) DCI formats 3 and 3A, which are for power control commands.

DCI format 0 used for uplink grant may include a carrier indicator necessary for carrier aggregation, which will be described later, an offset (flag for format 0/format 1A differentiation) used to differentiate DCI formats 0 and 1A from each other, a frequency hopping flag that indicates whether frequency hopping is used for uplink PUSCH transmission, information about resource block assignment, used for a UE to transmit a PUSCH, a modulation and coding scheme, a new data indicator used to empty a buffer for initial transmission in relation to a HARQ process, a transmit power control (TPC) command for a scheduled PUSCH, information about a cyclic shift for a demodulation reference signal (DMRS) and OCC index, and a UL index and channel quality indicator request (CSI request) necessary for a TDD operation. DCI format 0 does not include a redundancy version, unlike DCI formats relating to downlink scheduling allocation since DCI format 0 uses synchronous HARQ. The carrier indicator is not included in DCI formats when cross-carrier scheduling is not used.

DCI format 4, which is a new format added to LTE-A Release 10, supports application of spatial multiplexing to uplink transmission in LTE-A. DCI format 4 has a larger message size than DCI format 0 since it further includes information for spatial multiplexing. DCI format 4 includes additional control information in addition to the control information included in DCI format 0. That is, DCI format 4 includes information on a modulation and coding scheme for the second transmission block, precoding information for multi-antenna transmission, and sounding reference signal (SRS) request information. DCI format 4 does not include an offset for differentiation between formats 0 and 1A as it has a larger size than DCI format 0.

DCI formats 1, 1A, 1B, 1C, 1D, 2, 2A, 2B and 2C for downlink scheduling allocation may be broadly divided into DCI formats 1, 1A, 1B, 1C and 1D, which do not support spatial multiplexing, and DCI formats 2, 2A, 2B and 2C, which support spatial multiplexing.

DCI format 1C supports only frequency contiguous allocation as compact frequency allocation, but includes neither a carrier indicator nor a redundancy version, compared to the other formats.

DCI format 1A is intended for downlink scheduling and random access. DCI format 1A may include a carrier indicator, an indicator for indicating whether or not downlink distributed transmission is used, PDSCH resource allocation information, a modulation and coding scheme, a redundancy version, a HARQ processor number for indicating a processor used for soft combining, a new data indicator used to empty a buffer to implement initial transmission in relation to a HARQ process, a TPC command for a PUCCH, and an uplink index necessary for TDD operation.

DCI format 1 includes control information similar to that of DCI format 1A. DCI format 1 supports non-contiguous resource allocation, whereas DCI format 1A is related to contiguous resource allocation. Accordingly, DCI format 1 further includes a resource allocation header, and thus slightly increases control signaling overhead as a trade-off for increase in flexibility of resource allocation.

Both DCI formats 1B and 1D further include precoding information, compared to DCI format 1. DCI format 1B includes PMI acknowledgement, and DCI format 1D includes downlink power offset information. Most control information included in DCI formats 1B and 1D corresponds to that of DCI format 1A.

DCI formats 2, 2A, 2B and 2C basically include most of the control information included in DCI format 1A and further include information for spatial multiplexing. In this embodiment, the information for spatial multiplexing corresponds to a modulation and coding scheme for the second transmission block, a new data indicator, and a redundancy version.

DCI format 2 supports closed loop spatial multiplexing, and DCI format 2A supports open loop spatial multiplexing. Both DCI formats 2 and 2A include precoding information. DCI format 2B supports dual layer spatial multiplexing combined with beamforming and further includes cyclic shift information for a DMRS. DCI format 2C, which may be regarded as an extended version of DCI format 2B, supports spatial multiplexing for up to 8 layers.

DCI formats 3 and 3A may be used to complement the TPC information included in the aforementioned DCI formats for uplink grant and downlink scheduling allocation, namely, to support semi-persistent scheduling. A 1-bit command is used per UE in the case of DCI format 3, and a 2-bit command is used per UE in the case of DCI format 3A.

One of the DCI formats described above is transmitted over a PDCCH, and a plurality of PDCCHs may be transmitted in the control region. A UE may monitor the plurality of PDCCHs.

PDCCH processing

Control channel elements (CCEs), which are contiguous logical allocation units, are used in mapping a PDCCH to REs. A CCE includes a plurality of resource element groups (e.g., 9 REGs). Each REG includes four REs which may neighbor each other if the RS is excluded.

The number of CCEs necessary for a specific PDCCH depends on a DCI payload corresponding to the size of control information, a cell bandwidth, a channel coding rate, etc. Specifically, the number of CCEs for a specific PDCCH may be defined according to PDCCH formats as shown in Table 1.

TABLE 1

| PDCCH format | Number of CCEs | Number of REGs | Number of PDCCH bits |
|---|---|---|---|
| 0 | 1 | 9 | 72 |
| 1 | 2 | 18 | 144 |
| 2 | 4 | 36 | 288 |
| 3 | 8 | 72 | 576 |

As described above, one of the four formats may be used for a PDCCH, it is not known to the UE. Accordingly, the UE needs to perform decoding without knowing the PDCCH format. This is called blind decoding. Since decoding as many CCEs used for downlink as possible for each PDCCH format causes significant load to the UE, a search space is defined in consideration of restriction on the scheduler and the number of attempts to perform decoding.

That is, the search space is a set of candidate PDCCHs composed of CCEs which the UE needs to attempt to decode at an aggregation level. Each aggregation level and the corresponding number of candidate PDCCHs may be defined as shown in Table 2.

TABLE 2

| | Search space | | Number of PDCCH candidates |
|---|---|---|---|
| | Aggregation level | Size (in CCE units) | |
| UE-specific | 1 | 6 | 6 |
| | 2 | 12 | 6 |
| | 4 | 8 | 2 |
| | 8 | 16 | 2 |
| Common | 4 | 16 | 4 |
| | 8 | 16 | 2 |

As shown in Table 2, there are 4 aggregation levels, and the UE has a plurality of search spaces according to the aggregation levels. The search spaces may be divided into a UE-specific search space (USS) and a common search space (CSS), as shown in Table 2. The UE-specific search space is for specific UEs. Each UE may check an RNTI and CRC with which the PDCCH is masked, by monitoring the UE-specific search space thereof (attempting to decode a PDCCH candidate set according to a possible DCI format) and acquire control information if the RNTI and CRC are valid.

The CSS is intended for use in the case in which a plurality of UEs or all UEs need to receive PDCCHs, as in the cases of system information dynamic scheduling and paging messages. The CSS may be used for a specific UE in terms of resource management. Furthermore, the CSS may overlap the USS.

Specifically, the search space may be determined by Equation 1 given below.

## Equation 1

$$L\left\{(Y_k + m')\bmod \left\lfloor\frac{N_{\mathrm{CCE},k}}{L}\right\rfloor\right\} + i$$

Here, L denotes an aggregation level, $Y_k$ is a variable determined by an RNTI and subframe number k, and m' is the number of PDCCH candidates. If carrier aggregation is applied, $m' = m + M^{(L)} \cdot n_{Cl}$ and otherwise, $m' = m$. Herein, $M^{(L)}$ is the number of PDCCH candidates. $N_{\mathrm{CCE},k}$ is the total number of CCEs in the control region of a k-th subframe, and i is a factor indicating an individual CCE in each PDCCH candidate and is set as i=0, 1,..., L-1. For the CSS, $Y_k$ is always determined to be 0.

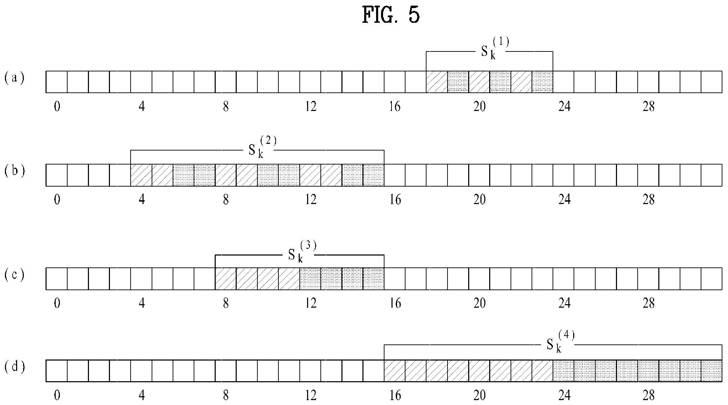

FIG. 5 shows USSs (shaded portions) at respective aggregation levels which may be defined according to Equation 1. Carrier aggregation is not used, and $N_{\mathrm{CCE},k}$ is set to 32 for simplicity of illustration.

FIGs. 5(a), 5(b), 5(c) and 5(d) illustrate the cases of aggregation levels 1, 2, 4 and 8, respectively. The numbers represent CCE numbers. In FIG. 5, the start CCE of a search space at each aggregation level is determined based on an RNTI and subframe number k. This CCE may be differently determined for a UE at the respective aggregation levels in the same subframe according to the modulo function and L. The start CCE is always determined to correspond to a multiple of the corresponding aggregation level due to L. In the description given below, $Y_k$ is exemplarily assumed to be CCE number 18. The UE attempts to sequentially decode the CCEs starting with the start CCE in units of CCEs determined for a corresponding aggregation level. In FIG. 5(b), for example, The UE attempts to decode the CCEs two by two, starting with CCE 4, which is the start CCE, according to the aggregation level.

In this manner, the UE attempts to perform decoding in a search space. The number of decoding attempts is determined by a DCI format and a transmission mode determined through radio resource control (RRC) signaling. If carrier aggregation is not applied, the UE needs to attempt to perform decoding up to 12 times in the CSS, in consideration of two DCI sizes (DCI formats 0/1A/3/3A and DCI format 1C) for each of six PDCCH candidates. In the USS, the UE needs to attempt to perform decoding up to 32 times, in consideration of two DCI sizes for each of 16 (6+6+2+2=16) PDCCH candidates. Accordingly, when carrier aggregation is not applied, the UE needs to attempt to perform decoding up to 44 times.

On the other hand, if carrier aggregation is applied, the maximum number of decodings increases because as many decodings for a USS and DCI format 4 as the number of DL resources (DL component carriers) are added.

Reference Signal (RS)

In transmitting packets in a wireless communication system, the packets are transmitted over a radio channel, and therefore signal distortion may occur in the transmission process. For a receiver to receive the correct signal in spite of signal distortion, the received distorted signal should be corrected using channel information. In detecting the channel information, a signal which is known to both the transmitter and the receiver is transmitted and the extent of distortion of the signal received over the channel is mainly used to detect the channel information. This signal is referred to as a pilot signal or a reference signal.

In the case in which data is transmitted and received using multiple antennas, a channel state between a transmit antenna and a receive antenna needs to be recognized to receive a correct signal. Accordingly, a separate RS is needed for each transmit antenna, more specifically, for each antenna port.

RSs may be divided into a UL RS and a DL RS. In the current LTE system, the UL RSs include:

i) a demodulation-reference signal (DM-RS) for channel estimation for coherent demodulation of information transmitted over a PUSCH and a PUCCH, and
ii) a sounding reference signal (SRS) allowing the BS to measure UL channel quality at frequencies for different networks.

The DL RSs include:

i) a cell-specific reference signal (CRS) shared by all UEs in a cell;

ii) a UE-specific reference signal for a specific UE;

iii) a demodulation-reference signal (DM-RS) transmitted for coherent demodulation in the case of transmission of a PDSCH;

iv) a channel state information-reference signal (CSI-RS) for delivering channel state information (CSI) in the case of transmission of a DL DMRS;

v) a multimedia broadcast single frequency network (MBSFN) reference signal transmitted for coherent demodulation of a signal transmitted in an MBSFN mode, and

vi) a positioning reference signal used to estimate geographic position information of a UE.

The RSs may be broadly divided into two reference signals according to the purposes thereof There are an RS used to acquire channel information and an RS used for data demodulation. Since the former is used when the UE acquires channel information on DL, this RS should be transmitted over a wide band and even a UE which does not receive DL data in a specific sub frame should receive the RS. This RS is also applied to situations such as handover. The latter RS is sent by the BS along with a resource on DL. The UE may receive the RS to perform channel measurement to implement data modulation. This RS should be transmitted in a region in which data is transmitted.

The CRS is used for two purposes of acquisition of channel information and data demodulation, and the UE-specific RS is used only for data demodulation. The CRS is transmitted in every subframe in a wide band and RSs for up to four antenna ports are transmitted according to the number of transmit antennas of the BS.

For example, if the number of transmit antennas of the BS is 2, CRSs for antenna ports #0 and #1 are transmitted. If the number of transmit antennas of the BS is 4, CRSs for antenna ports #0 to #3 are respectively transmitted.

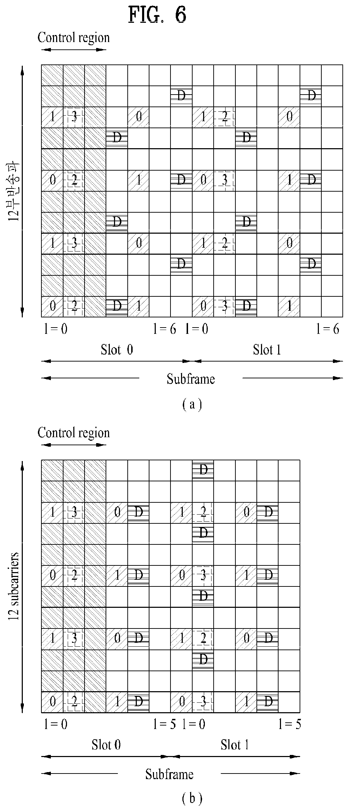

FIG. 6 is a diagram illustrating a pattern in which CRSs and DRSs defined in legacy 3GPP LTE (e.g., Release-8) are mapped to resource block (RB) pairs. A downlink RB pair, a unit in which an RS is mapped, may be represented as a unit of one subframe in the time domain times 12 subcarriers in the frequency domain. That is, one RB pair has a length of 14 OFDM symbols for a normal CP (FIG. 6(a)) and a length of 12 OFDM symbols for an extended CP (FIG. 6(b)).

FIG. 6 shows locations of RSs on RB pairs in a system with a BS supporting four transmit antennas. In FIG. 6, resource elements (REs) marked "0", "1", "2" and "3" represent the locations of the CRSs for antenna port indexes 0, 1, 2 and 3, respectively. In FIG. 6, REs denoted by "D" represent locations of the DMRSs.

Heterogeneous Deployments

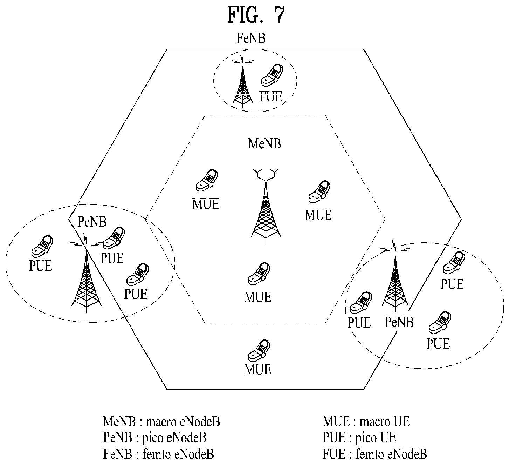

FIG. 7 illustrates a heterogeneous network wireless communication system including a macro eNB (MeNB) and a micro eNBs (PeNBs or FeNBs). The term "heterogeneous network" employed in this specification refers to a network in which an MeNB and a PeNB or FeNB coexist while they use the same radio access technology (RAT).

The MeNB is a normal eNB of a wireless communication system having wide coverage and high transmit power. The MeNB may be referred to as a macro cell.

The PeNB or FeNB may be referred to as, for example, a micro cell, pico cell, femto cell, home eNB (HeNB), relay, etc. (The exemplified PeNB or FeNB and MeNB may be collectively referred to as transmission points (TPs)). The PeNB or FeNB, a micro version of the MeNB, can independently operate while performing most functions of the MeNB. The PeNB or FeNB is a non-overlay type eNB that may be overlaid in an area covered by the MeNB or in a shadow area that is not covered by the MeNB. The PeNB or FeNB may cover a smaller number of UEs while having narrower coverage and lower transmit power than the MeNB.

A UE (hereinafter, referred to as a macro-UE) may be directly served by the MeNB, or a UE (hereinafter, referred to as a micro-UE) may be served by the PeNB or FeNB. In some cases, a PUE present in the coverage of the MeNB may be served by the MeNB.

PeNBs or FeNBs may be classified into two types according to whether or not UE access is limited.

The first type is an open access subscriber group (OSG) or non-closed access subscriber group (non-CSG) eNB and corresponds to a cell that allows access of the existing MUE or a PUE of a different PeNB. The existing MUE can handover to the OSG type eNB.

The second type is a CSG eNB which does not allow access of the existing MUE or a PUE of a different PeNB. Accordingly, handover to the CSG eNB is impossible.

Coordinated Multi-Point (CoMP)

To satisfy requirements for enhanced system performance of the 3GPP LTE-A system, CoMP transmission and reception technology (also called co-MIMO, collaborative MIMO or network MIMO) has been proposed. The CoMP technology may increase the performance of UEs located at a cell edge and the average sector throughput.

In a multi-cell environment with a frequency reuse factor of 1, the performance of a UE located at a cell edge and the average sector throughput may be lowered due to inter-cell interference (ICI). To attenuate ICI, the legacy LTE/LTE-A system has adopted a simple passive technique such as fractional frequency reuse (FFR) based on UE-specific power control such that a UE located at a cell edge may have appropriate throughput performance in an environment constrained by interference. However, attenuating the ICI or reusing ICI as a desired signal for the UE may be more preferable than lowering use of frequency resources per cell. To this end, a CoMP transmission technique may be employed.

CoMP schemes applicable to downlink may be broadly classified into joint processing (JP) and coordinated scheduling/beamforming (CS/CB).

According to the JP scheme, data can be used by each transmission point (eNB) of a CoMP cooperation unit. The CoMP cooperation unit refers to a set of eNBs used for a CoMP transmission scheme. The JP scheme may be further divided into joint transmission and dynamic cell selection.

Joint transmission refers to a technique of simultaneously transmitting PDSCHs from a plurality of transmission points (a part or the entirety of a CoMP cooperation unit). That is, a plurality of transmission points may simultaneously transmit data to a single UE. With the joint transmission scheme, the quality of a received signal may be coherently or non-coherently improved, and interference with other UEs may be actively eliminated.

Dynamic cell selection is a technique of transmitting a PDSCH from one transmission point (of a CoMP cooperation unit) at a time. That is, one transmission point transmits data to a single UE at a given time, while the other transmission points in the CoMP cooperation unit do not transmit data to the UE at the time. A transmission point to transmit data to a UE may be dynamically selected.

Meanwhile, in the CS/CB scheme, CoMP cooperation units may cooperatively perform beamforming for data transmission to a single UE. Herein, user scheduling/beamforming may be determined through coordination among cells of a CoMP cooperation unit, whereas data is transmitted to the UE only from a serving cell.

In the case of uplink, CoMP reception refers to reception of a signal transmitted through cooperation among a plurality of geographically separated transmission points. The CoMP schemes applicable to uplink may be classified into joint reception (JR) and coordinated scheduling/beamforming (CS/CB).

The JR scheme indicates that a plurality of reception points receives a signal transmitted through a PUSCH. The CS/CB scheme indicates that only one point receives a PUSCH, and user scheduling/beamforming is determined by coordination among the cells of a CoMP unit.

With the CoMP system as above, multi-cell base stations may jointly support data for a UE. In addition, the base stations may simultaneously support one or more UEs using the same radio frequency resources, thereby increasing system performance. Moreover, a base station may perform space division multiple access (SDMA) based on CSI between the UE and the base station.

In the CoMP system, a serving eNB and one or more cooperative eNBs are connected to a scheduler over a backbone network. The scheduler may receive channel information about the channel states between each UE and cooperative eNBs measured and fed back by the cooperative eNBs over the backbone network, and operate based on the channel information. For example, the scheduler may schedule information for a cooperative MIMO operation for the serving eNB and the one or more cooperative eNBs. That is, the scheduler may directly issue a command about the cooperative MIMO operation to each eNB.

As described above, the CoMP system may be expected to operate as a virtual MIMO system by grouping a plurality of cells into one group. Basically, the CoMP system may adopt a MIMO communication scheme employing multiple antennas.

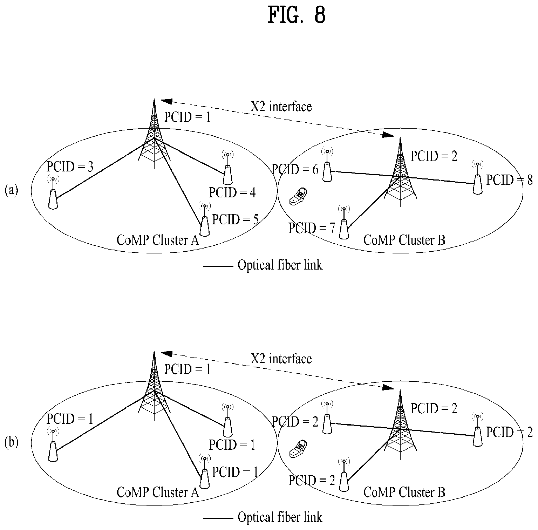

FIG. 8 illustrates a CoMP cluster. A CoMP cluster refers to a CoMP cooperation unit mentioned above. FIG. 8(a) illustrates a case in which the cells in a CoMP cluster use different physical cell IDs (PCIDs), and FIG. 8(b) illustrates a case in which the cells in a CoMP cluster use the same PCID. Even if the cells use the same PCID in a CoMP cluster, the CoMP clusters (CoMP clusters A and B in FIG. 8(b)) may use different PCIDs, and the cells in a single cluster may be configured in the form of distributed antennas or RRHs of a single eNB by sharing a PCID. In a variation, some of the cells in a cluster may share a PCID.

If the cells share a PCID, all the cells having the same PCID may transmit a common signal such as a primary synchronization signal (PSS)/secondary synchronization signal (SSS), a CRS, a PBCH, or a CRS-based PDCCH/PDSCH at the same time, thereby improving quality of received signals and removing the communication shadow area. Alternatively, some of the cells having the same PCID may transmit a common signal with higher transmit power, and the other cells may not transmit the common signal. However, in the case of unicast data transmission through a CSI-RS, a UE-specific RS and a UE-specific RS-based PDSCH, each cell may individually perform transmission and have a cell splitting gain.

Enhanced-PDCCH (EPDCCH)

In LTE after Release 11, an enhanced-PDCCH (EPDCCH) which can be transmitted through the existing PDSCH region is considered as a solution to lack of capacity of a PDCCH caused by coordinated multi-point (CoMP), multi user-multiple input multiple output (MU-MIMO), and the like and degradation of PDCCH performance caused by inter-cell interference. In addition, in the case of EPDCCH, channel estimation may be performed based on DMRSs in order to obtain a pre-coding gain, unlike the case of the existing CRS-based PDCCH.

While transmission of the PDCCH described above is performed based on REGs and CCEs configured with REGs, transmission of the EPDCCH may be performed based on enhanced REGs (EREGs), enhanced CCE (ECCEs), and physical resource block (PRB) pairs. Each ECCE may include four EREGs, and each PRB pair may include four ECCEs. EPDCCH also employs the concept of aggregation level as in the case of PDCCH, but the aggregation levels for the EPDCCH are based on ECCEs.

EPDCCH transmission may be divided into localized EPDCCH transmission and distributed EPDCCH transmission according to configuration of a PRB pair used for EPDCCH transmission. Localized EPDCCH transmission represents a case in which resource sets used for transmission of an EPDCCH neighbor each other in the frequency domain, and precoding may be applied to obtain a beamforming gain. For example, localized EPDCCH transmission may be based on consecutive ECCEs the number of which corresponds to an aggregation level. On the other hand, distributed EPDCCH transmission represents transmission of an EPDCCH in a separated PRB pair in the frequency domain, and has a gain in terms of frequency diversity. For example, distributed EPDCCH transmission may be based on the ECCE having four EREGs included in each PRB pair separated in the frequency domain.

A UE may perform blind decoding similar to the blind decoding performed in the legacy LTE/LTE-A system, in order to receiver/acquire DCI through an EPDCCH. More specifically, the UE may attempt to perform decoding for (or monitor) a set of EPDCCH candidates according to each aggregation level to obtain DCI formats corresponding to a set transmission mode. Herein, the set of EPDCCH candidates to be monitored may be referred to as an EPDCCH USS. This search space may be configured/constructed according to each aggregation level. In addition, aggregation levels 1, 2, 4, 8, 16 and 32, which are more or less different from the aggregation levels for the legacy LTE/LTE-A system, are available according to the subframe type, the CP length, the quantity of resources available in a PRB pair, and the like.

Hereinafter, a description will be given of a method of transmitting and receiving control information according to the channel state by configuring multiple search spaces for a UE. Herein, the search space may refer to a search space for each aggregation level (or the aggregation), or a set of one or more PRB pairs related to EPDCCH transmission, namely, an EPDCCH PRB (pair) set.

Configuration of multiple search spaces, i.e., aggregations or sets of PRB pairs may be used to distinguish between transmission schemes for control information through the PRB pair set. As described above, an EPDCCH may be transmitted according to two transmission schemes of localized transmission and distributed transmission. EPDCCH PRB sets configured for a UE may be intended for different transmission schemes. For example, when a first EPDCCH PRB set and a second EPDCCH PRB set are configured for a UE, a first EPDCCH PRB set may be intended for localized EPDCCH transmission, and the second EPDCCH PRB set may be intended for distributed transmission. However, this is simply illustrative. The first EPDCCH PRB set and the second EPDCCH PRB set may have the same transmission scheme.

Configuration of multiple EPDCCH PRB sets may be intended to distinguish between transmission points that transmit control information. More specifically, a network may redundantly establish search space configurations of adjacent transmission points, and configure not only the search space of a serving transmission point but also the search space of an adjacent transmission point for the UE, thereby implementing handover of control information transmission without explicit signaling.

For example, a first transmission point (TP 1) and a second transmission point (TP 2) may configure the first EPDCCH PRB set and the second EPDCCH PRB set for a UE. Herein, the first EPDCCH PRB set may be for TP 1, and the second EPDCCH PRB set may be for TP 2. A network may allow a transmission point having good channel state to transmit control information, in consideration of mobility of the UE. In this process, the control information transmitted through each EPDCCH PRB set may carry a cell ID/virtual cell ID for the transmission point, thereby implementing handover of a PDSCH as well. To this end, the transmission points may exchange information necessary for handover of the UE through X2 signaling. In addition, to implement PDSCH handover, CSI-RS configurations (e.g., non-zero power CSI-RS configuration, zero power CSI-RS configuration, IMR, etc.) used by each transmission point may be delivered to the UE through higher layer signaling.

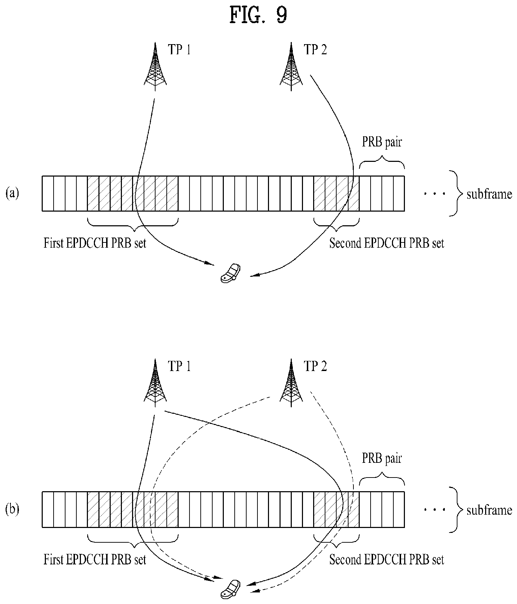

The relationship between the transmission points and the EPDCCH PRB sets as above may be understood as representing the cases illustrated in FIG. 9 (it should be noted that the cases illustrated in FIG. 9 do not cover all the cases related to the present invention). Referring to FIG. 9(a), the first EPDCCH PRB set may be intended for EPDCCH transmission from TP 1, and the second EPDCCH PRB set may be intended for EPDCCH transmission from TP 2. Alternatively, as shown in FIG. 9(b), both the first EPDCCH PRB set and the second EPDCCH PRB set may be intended for EPDCCH transmission from one of TP 1 and TP 2, which may be viewed as being intended for selection of a dynamic cell at the EPDCCH level.

The PRB set-specific "configuration" for configuring and managing multiple EPDCCH PRB sets for a UE as described above may contain information as described below. Of course, the information described below may be delivered to the UE through the "configuration", or may be individually delivered to the UE through higher layer signaling.

First, resource mapping information (rate matching or puncturing pattern) may be included in the configuration. The EPDCCH is transmitted using the PDSCH region, and there may be signals/channels transmitted regardless of or prior to the EPDCCH among the REs including the REs contained in the PDSCH resource region in the legacy LTE/LTE-A system, or there may be signals/channels having higher priority than the EPDCCH. An eNB does not map the EPDCCH to an RE in which such signals/channel are transmitted. The UE may properly demodulate/decode the EPDCCH only when it recognizes the information as above. Particularly, in the case in which control information is transmitted from different transmission points as illustrated in FIG. 9, the UE needs to be informed of information about signal transmission and/or configuration of the transmission points. Accordingly, information (a parameter set) for determining an RE to which the EPDCCH is mapped may be included in the above configuration or transmitted to the UE through higher layer signaling. In this case, the UE for which the first EPDCCH PRB set and the second EPDCCH PRB set are configured can determine an RE to which the EPDCCH is mapped by using the parameter set when attempting to decode the EPDCCH for each of the first EPDCCH PRB set and the second EPDCCH PRB set. Accordingly, blind coding may be normally performed even when a transmission point other than the serving cell transmits the EPDCCH through the first EPDCCH PRB set and the second EPDCCH PRB set.

The information (a parameter set) for determining REs to which the EPDCCH are mapped may include CRS-related information (parameters), CSI-RS-related information (parameters), PDCCH-related information (parameters), and other information.

The CRS-related information may include the number of CRS antenna ports, CRS frequency shift information (v-shift), and MBSFN subframe information. The UE may recognize whether or not a CRS is transmitted in the PDSCH region through the MBSFN subframe information. For a subframe other than the MBSFN subframe, the UE may recognize, based on the number of the CRS antenna ports and the CRS frequency shift information, an RE in which the CRS is transmitted in the PDSCH region. The UE may perform EPDCCH blind decoding, assuming that the EPDCCH is not mapped to the RE in which the CRS is transmitted. If the UE does not (or fails to) receive such CRS-related information, it may determine an RE to which the EPDCCH is mapped, using the CRS-related information of the serving cell.

The CSI-RS-related information may include CSI-RS configuration information and zero power CSI-RS information (including IMR configuration information) which are used by the corresponding transmission point. The UE may recognize, through the CSI-RS-related information, an RE that is used for transmission of a CSI-RS to which the EPDCCH is not mapped or a zero power CSI-RS. In this case, the information may be given in a format for identifying the CSI-RS or zero power CSI-RS resource configuration.

The PDCCH-related information may include information about the number of OFDM symbols in which the PDCCH is transmitted. Through this information, the UE may recognize an OFDM symbols in which PDSCH transmission starts. In other words, the PDCCH-related information may include information about the OFDM symbol in which PDSCH transmission starts. Herein, informing of the OFDM symbol in which the PDSCH transmission starts may be interpreted as indicating the starting symbol of the EPDCCH.

The other information may include PBCH, SCH, and paging information. The signals/channels described above may be viewed as signals/channels that need to be transmitted prior to the EPDCCH. Accordingly, information about a subframe, an OFDM symbol, and a frequency in which such signals/channels are transmitted may be signaled to the UE.

Second, a scrambling sequence parameter may be included in the aforementioned configuration. The first EPDCCH PRB set and second EPDCCH PRB set may employ different scrambling sequences for EPDCCH transmission, and accordingly a scrambling sequence parameter for each set may need to be delivered to the UE. Thereby, the network may implement multi-user (MU) MIMO through non-orthogonal sequences. The network may also discriminate between transmission points and between EPDCCH PRB sets/search spaces/transmission schemes through the scrambling sequences.

Third, antenna port assignment information may be included in the aforementioned configuration.

Since localized transmission and distributed transmission are transmission schemes different from each other, they may be provided with different mapping relationship between the resources in the corresponding PRB pair and the antenna ports. For example, in the case of the localized transmission, one PRB may be divided into four ECCEs, and a different antenna port may be assigned to each ECCE. In the case of distributed transmission, if a shared RS is used, all the resources in a PRB pair may need to be decoded using the same antenna port. In addition, if configuration of a plurality of search spaces (EPDCCH PRB sets) and search space-specific antenna port assignment are adopted between UEs that use the same transmission scheme to increase the capacity of a cell, MU-MIMO may be advantageously implemented in the cell (for example, in the case of ECCEs 0, 1, 2 and 3 of a PRB pair, if ports 7, 8, 9 and 10 are assigned to UE 0, and ports 10, 9, 8 and 7 are assigned to UE 1, MU-MIMO may be implemented even at aggregation level 1 using the different antenna ports). In another example, when both common control information and UE-specific control information need to be simultaneously delivered (or when a subframe for transmission of the common control information and a subframe for transmission of the UE-specific control information are mixed within a higher level signaling period), a search space (i.e., EPDCCH PRB set) configuration for each information may be signaled. In this case, the common control information may be delivered in the distributed transmission scheme, and the UE-specific control information may be delivered in the localized transmission scheme.

To this end, according to an embodiment of the present invention, information about assignment of an antenna port to be used in performing blind decoding may be contained in the corresponding search space (i.e., EPDCCH PRB set) configuration.

The antenna port information may be delivered by signaling the antenna ports for each basic transmission unit (e.g., ECCE, EREG) within a PRB pair corresponding to a search space, or by pre-determining patterns and including the indexes of the patterns in the search space (i.e., EPDCCH PRB set) configuration. For example, antenna port assignment for localized transmission and antenna port assignment for distributed transmission may be predefined, the corresponding search space (i.e., EPDCCH PRB set) configuration may signal a specific antenna port assignment or a transmission scheme which each search space is intended for, and the UE may apply the antenna port assignment for each predefined transmission scheme to each search space. The antenna port assignment may be for a CRS or a DMRS depending on which RS forms the basis of operation of the control information.

Fourth, to allow different search spaces to be positioned in different resources, information about resource sets (e.g., ECCEs, EREGs) in each search space may be signaled. This information may include information (position, the number, and the like) about the PRB pairs belonging to a corresponding search space, the number of resource sets in each PRB pair, and resource set skip information (indicating that a specific resource set is excluded from the search space). Additionally, a configuration for each search space may include information related to the number of REs usable for EPDCCH such as special subframe information. For example, when a specific search space is assumed to be an ordinary subframe, and another search space is assumed to be a special subframe, the UE may derive, from the number of available REs which varies depending on the special subframe configuration, aggregation levels (e.g., aggregation levels 1, 2, 4 and 8, and aggregation levels 2, 4, 8 and 6) and the number of EREGs per ECCE (e.g., 4 EREGs per ECCE and 8 EREGs per ECCE) which are applied to the respective search spaces, and use the same in performing blind decoding.

Fifth, the aggregation level information for each search space (or EPDCCH set) may be included in the configuration.

A transmission point may instruct the UE (through, for example, higher layer signaling) to perform blind decoding for different aggregation levels in different EPDCCH sets.

For example, if different EPDCCH sets are used as a CSS and a USS, respectively, the UE may be instructed to perform blind decoding only for aggregation levels 4 and 8 in an EPDCCH set used as the CSS and to perform blind decoding for all aggregation levels 1, 2, 4 and 8 in an EPDCCH set used as the USS. Alternatively, in the case of two localized EPDCCH sets (or two distributed EPDCCH sets or a mixture of a localized EPDCCH set and a distributed EPDCCH set), blind decoding may be set to be applied to a different set of aggregation levels in each set.

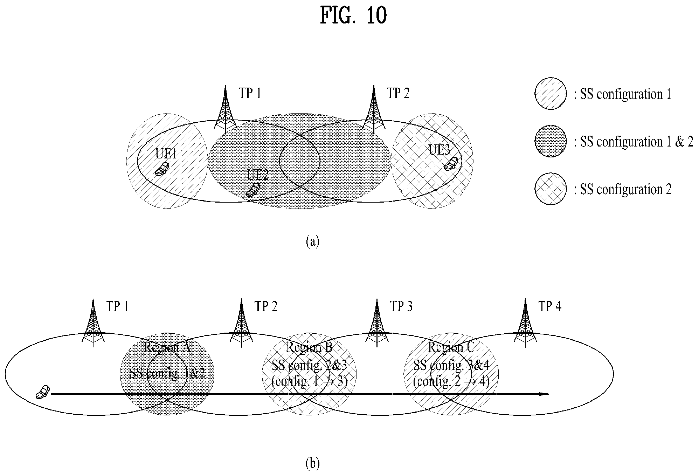

FIG. 10 illustrates handover of control information which is implementable in the case in which multiple search spaces/EPDCCH PRB sets are configured for a UE as described above, and the configuration information about each of the search spaces/EPDCCH PRB sets is delivered. In FIG. 10, the SS configuration refers to the aforementioned "configuration" for configuring and operating multiple EPDCCH PRB sets for the UE. Referring to FIG. 10(a), TP 1/the network may signal SS configuration 1 to UE 1, and signal SS configurations 1 and 2 to UE 2 (SS configuration 1 may be a configuration related to TP 1, and SS configuration 2 may be a configuration related to TP 2). To this end, each transmission point may determine a UE to which the SS configuration elements and multiple SS configurations are to be delivered, based on CSI, a serving cell measurement result and a neighbor cell measurement result which are delivered by a UE within the region of the transmission point. In FIG. 10(a), UE 2 receives signaling of both SS configurations 1 and 2, and accordingly it may be possible for the UE 2 to select a transmission point (to transmit control information) according to the position thereof.

FIG. 10(b) illustrates a case in which a UE moves between the regions of multiple transmission points. As a UE to receive signaling of SS configurations moves in the direction indicated by the arrow, SS configurations 1 and 2 may be signaled to the UE in region A, and SS configuration 1 may be reconfigured with SS configuration 3 for the UE in region B with SS configuration 2 maintained. Similarly, SS configuration 2 may be reconfigured with SS configuration 4 for the UE in region C. This process of reconfiguration may allow the network to track mobility of the UE without explicit handover while the UE moves from the region of the first transmission point (TP 1) to a fourth transmission point (TP 4). In addition, the UE may be informed of a virtual cell ID through, for example, control signaling, and the PDSCH may also change the serving cell without explicit handover.

Meanwhile, in the case in which a plurality of EPDCCH PRB sets is configured and the EPDCCH PRB sets are transmitted from different transmission points as described above, the UE may be provided with information about each transmission point to transmit a corresponding set. Such information about the transmission points may be represented in the form of information about RSs (e.g. CRSs or CSI-RSs) which the transmission points to transmit EPDCCH in the respective EPDCCH PRB sets constantly transmit. If information about the transmission points in each EPDCCH PRB set is provided to the UE, the UE may recognize, based on the provided information, the large scale properties (for example, delay spread, Doppler spread, frequency shift, average received power, received timing, etc.) of the EPDCCH (or an RS for demodulation of the EPDCCH) in each EPDCCH PRB set. Since the large scale properties of an EPDCCH transmitted from one transmission point are different from the large scale properties of another EPDCCH transmitted from another transmission point, it may be possible for the UE to detect an EPDCCH in each set more effectively by deriving the large scale properties of the EPDCCH transmitted from a transmission point in the set based on the provided information, i.e., an RS constantly transmitted by the transmission point that transmits the EPDCCH.

To this end, information about quasi co-location (QCL) of an EPDCCH (or a DMRS used for demodulation of the EPDCCH) transmitted in the corresponding PRB pair set (or search space) and a specific signal (e.g., a CRS and a CSI-RS (e.g., a CSI-RS resource and/or a port), a DRS, a PBCH/SCH, etc.) may be signaled. Herein, the QCL information suggests that RSs or RS ports having a QCL relationship can be assumed to have the same signal properties (large-scale properties) within a long period. The UE may track large-scale properties for EPDCCH decoding in each PRB pair set (or search space) more quickly and accurately based on the signaled information (a signal having a QCL relationship with an EPDCCH (EPDCCH RS) transmitted in the PRB pair set (or search space)). More specifically, the QCL information may include i) types of signals having a QCL relationship with an EPDCCH (or EPDCCH RS) to be transmitted in a PRB pair set (or search space), including a CRS (information such as v-shift, the number of ports, and port numbers may be additionally signaled), a CSI-RS (CSI-RS resource (CSI-RS group number), CSI-RS port, CSI-RS transmission period and offset), and PBCH/SCH(PSS/SSS) (including PBCH/SCH transmission timing information), and ii) information (such as a cell ID and scrambling parameters) for decoding of a signal having the QCL relationship.

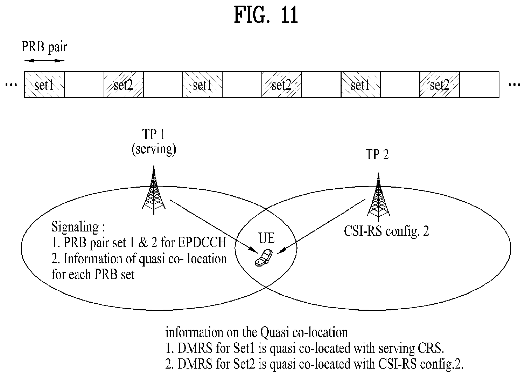

FIG. 11 illustrates detecting an EPDCCH using different quasi co-location (QCL) information for each EPDCCH resource set. In FIG. 11, transmission point 1 (TP1), which is a serving transmission point for a UE, signals PRB pair sets 1 and 2 for EPDCCHs to the UE (in this case, DMRS configurations for the PRB pair sets may be partially different from each other). TP 1 may signal to the UE that the DMRS of PRB pair set 1 has a QCL relationship with the CRS of TP 1 and that the DMRS of PRB pair set 2 has a QCL relationship with CSI-RS configuration 2 (the CSI-RS is assumed to have been pre-signaled). TP2 may transmit a CSI-RS according to CSI-RS configuration 2 (in this case, the QCL information about PRB pair set 1 may be omitted and the resource set for which the information is not signaled may be assumed to have a QCL relationship with the RS of the current serving cell). Thereafter, the serving transmission point may change or maintain the transmission point to transmit the EPDCCH, based on, for example, the channel information which the UE reports. The UE may perform EPDCCH detection in each PRB pair set more accurately based on the signaled QCL information.

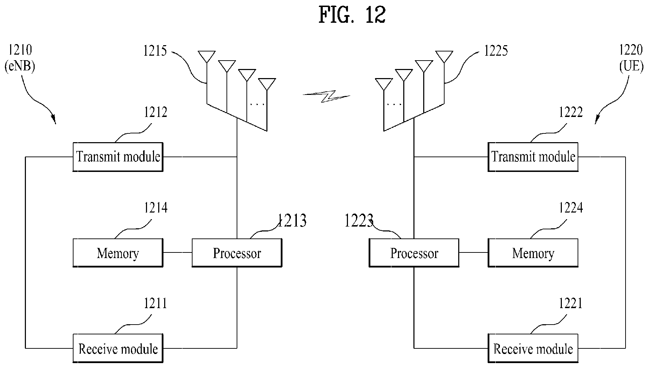

FIG. 12 is a diagram illustrating configurations of a transmission point and a UE according to one embodiment of the present invention.

Referring to FIG. 12 a transmission point 1210 may include a receive module 1211, a transmit module 1212, a processor 1213, a memory 1214, and a plurality of antennas 1215. The antennas 1215 represent a transmission point that supports MIMO transmission and reception. The receive module 1211 may receive various signals, data and information from a UE on uplink. The transmit module 1212 may transmit various signals, data and information to a UE on downlink. The processor 1213 may control overall operation of the transmission point 1210.

The processor 1213 of the transmission point 1210 according to one embodiment of the present invention may perform operations necessary for the embodiments described above.

Additionally, the processor 1213 of the transmission point 1210 may function to computationally process information received by the transmission point 1210 or information to be transmitted to the outside, etc. The memory 1214, which may be replaced with an element such as a buffer (not shown), may store the computationally processed information for a predetermined time.

Referring to FIG. 12, a UE 1220 may include a receive module 1221, a transmit module 1222, a processor 1223, a memory 1224, and a plurality of antennas 1225. The antennas 1225 mean that the UE supports MIMO transmission and reception. The receive module 1221 may receive various signals, data and information from an eNB on downlink. The transmit module 1222 may transmit various signals, data and information to the eNB on uplink. The processor 1223 may control overall operation of the UE 1220.

The processor 1223 of the UE 1220 according to one embodiment of the present invention may perform operations necessary for the embodiments described above.

Additionally, the processor 1223 may function to computationally process information received by the UE 1220 or information to be transmitted to the outside, and the memory 1224, which may be replaced with an element such as a buffer (not shown), may store the computationally processed information for a predetermined time.

The configurations of the transmission point and the UE as described above may be implemented such that the above-described embodiments are independently applied or two or more thereof are simultaneously applied, and description of redundant parts is omitted for clarity.

Description of the transmission point 1210 in FIG. 12 may also be applied to a relay which serves as a downlink transmitter or an uplink receiver, and description of the UE 1220 may be equally applied to a relay which serves as a downlink receiver or an uplink transmitter.

The embodiments of the present invention may be implemented through various means, for example, hardware, firmware, software, or a combination thereof.

When implemented by hardware, a method according to embodiments of the present invention may be embodied as one or more application specific integrated circuits (ASICs), one or more digital signal processors (DSPs), one or more digital signal processing devices (DSPDs), one or more programmable logic devices (PLDs), one or more field programmable gate arrays (FPGAs), a processor, a controller, a microcontroller, a microprocessor, etc.

When implemented by firmware or software, a method according to embodiments of the present invention may be embodied as a module, a procedure, or a function that performs the functions or operations described above. Software code may be stored in a memory unit and executed by a processor. The memory unit is located at the interior or exterior of the processor and may transmit and receive data to and from the processor via various known means.

Preferred embodiments of the present invention have been described in detail above to allow those skilled in the art to implement and practice the present invention. Although the preferred embodiments of the present invention have been described above, those skilled in the art will appreciate that various modifications and variations can be made in the present invention without departing from the scope of the invention. For example, those skilled in the art may use a combination of elements set forth in the above-described embodiments. Thus, the present invention is not intended to be limited to the embodiments described herein, but is intended to have the widest scope corresponding to the principles and novel features disclosed herein.

The scope of the invention is solely defined by the appended claims.

[Industrial Applicability]

The embodiments of the present invention as described above are applicable to various mobile communication systems.

**Claims**

1. A method for receiving control information through an enhanced physical downlink control channel, EPDCCH, by a user equipment (1220), UE, in a wireless communication system, the method further comprising:

    receiving a plurality of EPDCCH set configurations;
    attempting to decode the EPDCCH in each of a plurality of EPDCCH physical resource block, PRB, sets based on each of the plurality of EPDCCH set configurations,
    wherein in attempting the decoding, the UE determines EPDCCH resource elements for each of the plurality of EPDCCH PRB sets using each parameter set indicated by each of the plurality of EPDCCH set configurations for each of the EPDCCH PRB sets, and
    wherein the each parameter set indicated by each of the plurality of EPDCCH set configurations comprises a cell-specific reference signal, CRS, position related parameter, a channel state Information-reference signal, CSI-RS, position related parameter, and a physical downlink control channel, PDCCH, position related parameter.

2. The method according to claim 1, wherein the CRS position related parameter comprises the number of antenna ports for a CRS, frequency shift information of the CRS, and multimedia broadcast single frequency network, MBSFN, subframe information.

3. The method according to any one of preceding claims, wherein the UE assumes that the EPDCCH is not mapped to resource elements related to the number of antenna ports for a CRS and frequency shift information of the CRS.

4. The method according any one of preceding claims, wherein the CSI-RS position related parameter is a parameter is used to identify a zero power CSI-RS resource configuration.

5. The method according to claim 4, wherein the UE assumes that the EPDCCH is not mapped to a resource element related to the zero power CSI-RS resource configuration.

6. The method according to any one of preceding claims, wherein the PDCCH position related parameter comprises information about the number of OFDM symbols, a PDCCH being transmitted in the OFDM symbols.

7. The method according to claim 6, wherein the UE recognizes an OFDM symbol based on the PDCCH position related parameter, transmission of the PDSCH starting in the OFDM symbol.

8. The method according to any one of preceding claims, wherein the UE receives the parameter set through higher layer signaling.

9. The method according to any one of preceding claims, wherein the plurality of EPDCCH PRB sets is transmitted from a plurality of transmission points.

10. The method according to claim 9, wherein the plurality of transmission points is contained in a coordinate multi point, CoMP, cluster.

11. The method according to any one of preceding claims, wherein each of the plurality of EPDCCH PRB sets is configured for one of localized EPDCCH transmission and distributed EPDCCH transmission.

12. The method according to any one of preceding claims, wherein the plurality of EPDCCH PRB set configurations are received via higher layer signaling.

13. A user equipment, UE (1220), for receiving control information through an enhanced physical downlink control channel, EPDCCH in a wireless communication system, comprising:

   a receive module (1221); and
   a processor (1223),
   wherein the receive module is configured to receiving a plurality of EPDCCH set configurations,
   wherein the processor is configured to attempt to decode the EPDCCH in each of a plurality of EPDCCH physical resource block, PRB, sets based on each of the plurality of EPDCCH set configurations,
   wherein in attempting the decoding, the processor determines EPDCCH resource elements for each of the plurality of EPDCCH PRB sets using each parameter set indicated by each of the plurality of EPDCCH set configurations for each of the EPDCCH PRB sets, and
   wherein the each parameter set indicated by each of the plurality of EPDCCH set configurations comprises a cell-specific reference signal, CRS, position related parameter, a channel state information-reference signal, CSI-RS, position related parameter, and a physical downlink control channel, PDCCH, position related parameter.

**Patentansprüche**

1. Verfahren zum Empfangen von Steuerinformationen durch einen verbesserten physikalischen Downlink-Steuerkanal, EPDCCH, durch ein Benutzergerät (1220), UE, in einem drahtlosen Kommunikationssystem, wobei das Verfahren ferner aufweist:

   Empfangen mehrerer EPDCCH-Satzkonfigurationen;
   Versuchen, den EPDCCH in jedem von mehreren physikalischen EPDCCH-Ressourcenblock-, PRB-, Sätzen basierend auf jeder der mehreren EPDCCH-Satzkonfigurationen zu dekodieren,
   wobei das UE bei dem Dekodierungsversuch unter Verwendung jedes Parametersatzes, der durch jede der mehrere EPDCCH-Satzkonfigurationen für jeden der EPDCCH-PRB-Sätze angezeigt wird, EPDCCH-Ressourcenelemente für jeden der mehreren EPDCCH-PRB-Sätze bestimmt, und
   wobei jeder Parametersatz, der durch jede der mehreren EPDCCH-Satzkonfigurationen angezeigt wird, einen zellenspezifischen Referenzsignal-, CRS-, positionsbezogenen Parameter, einen Kanalzustandsinformationsreferenzsignal-, CSI-RS-, positionsbezogenen Parameter und einen physikalischen Downlink-Steuerkanal-, PDCCH-, positionsbezogenen Parameter aufweist.

2. Verfahren nach Anspruch 1, wobei der CRS-positionsbezogene Parameter die Anzahl von Antennenanschlüssen für ein CRS, Frequenzverschiebungsinformationen des CRS und Multimedia-Rundfunk-Ein-Frequenznetzwerk-, MBSFN-, Subrahmeninformationen aufweist.

3. Verfahren nach einem der vorhergehenden Ansprüche, wobei das UE annimmt, dass der EPDCCH nicht auf Ressourcenelemente abgebildet wird, die sich auf die Anzahl von Antennenanschlüssen für ein CRS und Frequenzverschiebungsinformationen des CRS beziehen.

4. Verfahren nach einem der vorhergehenden Ansprüche, wobei der CSI-RSpositionsbezogene Parameter ein Parameter ist, der verwendet wird, um eine Nullleistungs-CSI-RS-Ressourcenkonfiguration zu identifizieren.

5. Verfahren nach Anspruch 4, wobei das UE annimmt, dass der EPDCCH nicht auf ein Ressourcenelement abgebildet wird, das die Nullleistungs-CSI-RS-Ressourcenkonfiguration betrifft.

6. Verfahren nach einem der vorhergehenden Ansprüche, wobei der PDCCHpositionsbezogene Parameter Informationen über die Anzahl von OFDM-Symbolen aufweisen, wobei ein PDCCH in den OFDM-Symbolen übertragen wird.

7. Verfahren nach Anspruch 6, wobei das UE ein OFDM-Symbol basierend auf dem PDCCH-positionsbezogenen Parameter erkennt, wobei die Übertragung des PDSCH in dem OFDM-Symbol beginnt.

8. Verfahren nach einem der vorhergehenden Ansprüche, wobei das UE den Parametersatz durch Signalisierung höherer Schichten empfängt.

9. Verfahren nach einem der vorhergehenden Ansprüche, wobei die mehreren EPDCCH-PRB-Sätze von mehreren Übertragungspunkten übertragen werden.

10. Verfahren nach Anspruch 9, wobei die mehreren Übertragungspunkte in einem Koordinaten-Mehrpunkt-, CoMP-, Cluster enthalten sind.

11. Verfahren nach einem der vorhergehenden Ansprüche, wobei jeder der mehreren EPDCCH-PRB-Sätze für eine lokalisierte EPDCCH-Übertragung oder eine verteilte EPDCCH-Übertragung konfiguriert wird.

12. Verfahren nach einem der vorhergehenden Ansprüche, wobei die mehreren EPDCCH-PRB-Satzkonfigurationen über eine Signalisierung höherer Schichten empfangen werden.

13. Benutzergerät, UE (1220), zum Empfangen von Steuerinformationen durch einen verbesserten physikalischen Downlink-Steuerkanal, EPDCCH, in einem drahtlosen Kommunikationssystem, das aufweist:

ein Empfangsmodul (1221); und
einen Prozessor (1223),
wobei das Empfangsmodul konfiguriert ist, um mehrere EPDCCH-Satzkonfigurationen zu empfangen,
wobei der Prozessor konfiguriert ist, um zu versuchen, den EPDCCH in jedem von mehreren physikalischen EPDCCH-Ressourcenblock-, PRB-, Sätzen basierend auf jeder der mehreren EPDCCH-Satzkonfigurationen zu dekodieren,
wobei der Prozessor bei dem Dekodierungsversuch unter Verwendung jedes Parametersatzes, der durch jede der mehrere EPDCCH-Satzkonfigurationen für jeden der EPDCCH-PRB-Sätze angezeigt wird, EPDCCH-Ressourcenelemente für jeden der mehreren EPDCCH-PRB-Sätze bestimmt, und
wobei jeder Parametersatz, der durch jede der mehreren EPDCCH-Satzkonfigurationen angezeigt wird, einen zellenspezifischen Referenzsignal-, CRS-, positionsbezogenen Parameter, einen Kanalzustandsinformationsreferenzsignal-, CSI-RS-, positionsbezogenen Parameter und einen physikalischen Downlink-Steuerkanal-, PDCCH-, positionsbezogenen Parameter aufweist.

## Revendications

1. Procédé pour recevoir des informations de contrôle à travers un canal physique de contrôle de liaison descendante amélioré, EPDCCH, par un équipement utilisateur (1220), UE, dans un système de communication sans fil, le procédé comprenant en outre :

la réception d'une pluralité de configurations d'ensembles d'EPDCCH ;
la tentative de décodage de l'EPDCCH dans chacun d'une pluralité d'ensembles de blocs de ressources physiques, PRB, d'EPDCCH sur la base de chacune de la pluralité de configurations d'ensembles d'EPDCCH,
dans lequel lors de la tentative de décodage, l'UE détermine des éléments de ressources EPDCCH pour chacun de la pluralité d'ensembles PRB d'EPDCCH en utilisant chaque ensemble de paramètres indiqué par chacune de la pluralité de configurations d'ensembles d'EPDCCH pour chacun des ensembles PRB d'EPDCCH, et
dans lequel chaque ensemble de paramètres indiqué par chacune de la pluralité de configurations d'ensembles d'EPDCCH comprend un paramètre lié à la position de signal de référence spécifique à la cellule, CRS, un paramètre lié à la position de signal de référence d'information sur l'état de canal, CSI-RS, et un paramètre lié à la position de canal physique de contrôle de liaison descendante, PDCCH.

2. Procédé selon la revendication 1, dans lequel le paramètre lié à la position de CRS comprend le nombre de ports d'antenne pour un CRS, des informations de décalage de fréquence du CRS, et des informations de sous-trame de réseau à fréquence unique de diffusion multimédia, MBSFN.

3. Procédé selon l'une quelconque des revendications précédentes, dans lequel l'UE suppose que l'EPDCCH n'est pas mappé à des éléments de ressources liés au nombre de ports d'antenne pour un CRS et à des informations de décalage de fréquence du CRS.

4. Procédé selon l'une quelconque des revendications précédentes, dans lequel le paramètre lié à la position de CSI-RS est un paramètre utilisé pour identifier une configuration de ressources de CSI-RS à puissance nulle.

5. Procédé selon la revendication 4, dans lequel l'UE suppose que l'EPDCCH n'est pas mappé à un élément de ressource lié à la configuration de ressources de CSI-RS à puissance nulle.

6. Procédé selon l'une quelconque des revendications précédentes, dans lequel le paramètre lié à la position de PDCCH comprend des informations sur le nombre de symboles OFDM, un PDCCH étant émis dans les symboles OFDM.

7. Procédé selon la revendication 6, dans lequel l'UE reconnaît un symbole OFDM sur la base du paramètre lié à la position de PDCCH, une émission du PDSCH commençant dans le symbole OFDM.

8. Procédé selon l'une quelconque des revendications précédentes, dans lequel l'UE reçoit l'ensemble de paramètres à travers une signalisation de couche supérieure.

9. Procédé selon l'une quelconque des revendications précédentes, dans lequel la pluralité d'ensembles PRB d'EPDCCH est émise à partir d'une pluralité de points d'émission.

10. Procédé selon la revendication 9, dans lequel la pluralité de points d'émission est contenue dans une grappe de coordonnées multipoints, CoMP.

11. Procédé selon l'une quelconque des revendications précédentes, dans lequel chacun de la pluralité d'ensembles PRB d'EPDCCH est configuré pour l'une parmi une émission EPDCCH localisée et une émission EPDCCH distribuée.

12. Procédé selon l'une quelconque des revendications précédentes, dans lequel la pluralité de configurations d'ensembles de PRB EPDCCH sont reçus via une signalisation de couche supérieure.

13. Equipement utilisateur, UE (1220), pour recevoir des informations de contrôle à travers un canal physique de contrôle de liaison descendante amélioré, EPDCCH, dans un système de communication sans fil, comprenant :

   un module de réception (1221) ; et
   un processeur (1223),
   dans lequel le module de réception est configuré pour la réception d'une pluralité de configurations d'ensembles d'EPDCCH,
   dans lequel le processeur est configuré pour tenter de décoder l'EPDCCH dans chacun d'une pluralité d'ensembles de blocs de ressources physiques, PRB, d'EPDCCH sur la base de chacune de la pluralité de configurations d'ensembles d'EPDCCH,
   dans lequel lors de la tentative de décodage, le processeur détermine des éléments de ressources EPDCCH pour chacun de la pluralité d'ensembles PRB d'EPDCCH en utilisant chaque ensemble de paramètres indiqué par chacune de la pluralité de configurations d'ensembles d'EPDCCH pour chacun des ensembles PRB d'EPDCCH, et
   dans lequel chaque ensemble de paramètres indiqué par chacune de la pluralité de configurations d'ensembles d'EPDCCH comprend un paramètre lié à la position de signal de référence spécifique à la cellule, CRS, un paramètre lié à la position de signal de référence d'information sur l'état de canal, CSI-RS, et un paramètre lié à la position de canal physique de contrôle de liaison descendante, PDCCH.

## FIG. 1

(a)

Radio frame

Slot

| #0 | #1 | #2 | ⋯ | #18 | #19 |

Subframe

(b)

One radio frame, $T_s = 307200T = 10ms$

One half-frame, $T_s = 153600T = 5ms$

One slot
$T_{slot} = 15360T_s$

$30720T_s$

One subframe, $30720T_s$

| Subframe#0 | Subframe#2 | Subframe#3 | Subframe#4 | Subframe#5 | | | Subframe#7 | Subframe#8 | Subframe#9 |

DwPTS  GP  UpPTS

DwPTS  GP  UpPTS

# FIG. 2

One downlink slot

7 OFDM symbols

Resource block
12×7 resource elements

resource elements

$N^{DL} \times 12$ subcarriers

12 subcarriers

# FIG. 3

# FIG. 4

EP 2 858 265 B1

# FIG. 5

FIG. 6

(a)

(b)

# FIG. 7

FeNB

FUE

MeNB

MUE

MUE

PeNB

PUE

PUE

PUE

MUE

MUE

PUE

PUE

PeNB

PUE

MeNB : macro eNodeB          MUE : macro UE
PeNB : pico eNodeB           PUE : pico UE
FeNB : femto eNodeB          FUE : femto eNodeB

# FIG. 8

EP 2 858 265 B1

# FIG. 9

FIG. 10

: SS configuration 1

: SS configuration 1 & 2

: SS configuration 2

TP 2

TP 1

UE3

UE2

UE1

(a)

TP 4

TP 3

TP 2

TP 1

Region C
SS config. 3&4
(config. 2 → 4)

Region B
SS config. 2&3
(config. 1 → 3)

Region A
SS config. 1&2

(b)

# FIG. 11

PRB pair

| set1 | | set2 | | set1 | | set2 | | set1 | | set2 | |

··· ···

TP 1
(serving)

TP 2

Signaling :
1. PRB pair set 1 & 2 for EPDCCH
2. Information of quasi co- location
for each PRB set

UE

CSI-RS config. 2

information on the Quasi co-location
1. DMRS for Set1 is quasi co-located with serving CRS.
2. DMRS for Set2 is quasi co-located with CSI-RS config.2.

## FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Handling of mapping of ePDCCH in presence of other signals. *LE ELCTRONICS, 3GPP Draft R1-122307,* 12 May 2012
- **LG ELECTRONICS.** Discussion of eREG/eCCE definition. *3GPP Draft R1-122308,* 12 May 2012
- **NTT DOCOMO.** View on Resource Mapping for ePDCCH. *3GPP Draft R1-121977,* 12 May 2012
- EPDCCH Design Aspects. *MOTOROLA MOBILITY, 3GPP Draft R1-121583,* 20 March 2012